# EUROPÄISCHE PATENTSCHRIFT

(11) **EP 1 630 307 B1**
(45) Veröffentlichungstag und Bekanntmachung des Hinweises auf die Patenterteilung: **25.07.2007**
(21) Anmeldenummer: 04020351.5
(22) Anmeldetag: 27.08.2004
(51) Int. Cl.: E03D 7/00, B62D 63/06

(54) **Mobile Toilettenräume**
Mobile sanitary facilities
Toilettes mobiles

(43) Veröffentlichungstag der Anmeldung: 01.03.2006
(73) Patentinhaber: Werner Wagner GmbH, 91619 Obernzenn (DE)
(72) Erfinder: Wagner, Werner, 91619 Obernzenn (DE)
(74) Vertreter: Küchler, Stefan

(56) Entgegenhaltungen:
- WO-A1-01/14664
- US-A- 2 817 091
- US-A- 4 653 125
- US-A1- 2003 173 801

## Beschreibung

Die Erfindung richtet sich auf mobile Toilettenräume in Form eines Toilettenwagens, umfassend ein Fahrgestell, einen geschlossenen Aufbau, der mit mehreren Toilettenräumen eingerichtet ist, und eine Kupplung zum Anhängen an ein Zugfahrzeug.

Mobile Toilettenräume finden bei Veranstaltungen aller Art Verwendung, bspw. bei Messen, Konzerten, auf Volksfesten, Oster- oder Weihnachtsmärkten, Kirchweihfesten, Wandertagen, etc. Bei jeder derartigen Veranstaltung müssen sie erst an- und nachher wieder abtransportiert werden, von der Aufstellung, Horizontaljustage und Anschluß ganz abgesehen.

Da andererseits die bekannten Toilettenwagen sehr schwer sind, können sie nur von Lastkraftwagen gezogen werden. Überdies sind sie im Straßenverkehr nur für geringe Geschwindigkeiten, bspw. bis zu 25 km/h, zugelassen. Aus diesem Grund bereitet es einen oftmals unverhältnismäßigen Aufwand, einen Toilettenwagen wegen einer Veranstaltung von kurzer Dauer, bspw. nur einen Tag, zu anzutransportieren, aufzustellen, anzuschließen und anschließend wieder abzutransportieren, und dies um so mehr, weil zu diesem Zweck ein Lastkraftwagen als Zugfahrzeug samt Fahrer organisiert und abgestellt werden muß.

Ein Toilettenwagen gemäß dem Oberbegriff des Anspruchs 1 ist in der US 2,817,091 offenbart.

Aus diesen Nachteilen des bekannten Standes der Technik resultiert das die Erfindung initiierende Problem, mobile Toilettenräume derart auszubilden, dass bei einem Einsatz der Aufwand für Organisation, Transport und Montage beträchtlich reduziert werden kann.

Die Lösung dieses Problems ist durch einen Toilettenwagen gemäß Anspruch 1 erreicht.

Durch die leichte Bauweise der Karosserie kann das Gewicht des Toilettenwagens so weit reduziert werden, dass als Zugfahrzeug ein Lieferwagen od. dgl. Gefährt, bspw. mit einem zulässigen Gesamtgewicht von nur 2,8 t, verwendbar ist. Die speziell für solche Fahrzeuge konzipierte Kugelkopf-Kupplung tut ein übriges, um die erwünschte Kompatibilität zu solchen Kraftwagen herzustellen. Dadurch ist für den Transport kein Lastkraftwagen erforderlich, der dabei für andere Einsätze über einen längeren Zeitraum hinweg blockiert wäre; vielmehr genügt es, einen Lieferwagen zu organisieren, der relativ leicht für einen entsprechenden Zeitraum entbehrlich sein kann. Außerdem ist es vergleichsweise leicht, einen derartigen Anhänger für größere Transportgeschwindigkeiten auszulegen und zuzulassen. Aus diesem Grund kann auch die Transportzeit reduziert werden. Ferner kann die Ankopplung anstelle mittels einer Lenkdeichsel mit einer starren Deichsel bewerkstelligt werden, an deren freiem Ende die Kugelkopf-Kupplung sitzt. Solche Anhänger sind beim Rangieren leichter zu steuern als übliche Lastwagen-Anhänger. Daher kann auch der Montageaufwand vor Ort reduziert werden.

Es hat sich als günstig erwiesen, dass der Wagen einen kastenförmigen Aufbau hat mit vier ebenen Stirn- oder Seitenwänden. Indem die Geometrie der Karosserie auf die denkbar einfachste Form reduziert wird, läßt sich der Herstellungsaufwand minimieren. Denn dadurch wird es möglich, die Karosserie aus Platten, insbesondere aus unverformbaren Platten anzufertigen, die eine hohe Verwindungssteifigkeit mitbringen und sich daher in bevorzugtem Maß für selbsttragende Konstruktionen eignen.

Beispiele solcher Platten sind plattenförmige Verbundwerkstoffe mit einem Schichtaufbau, der ihnen die gewünschte, hohe Verwindungssteifigkeit verleiht. Seine Vollendung findet dieser Erfindungsgedanke in einer Konstruktion des plattenförmigen Verbundwerkstoffs mit einer Kernschicht und zwei äußeren Deckschichten. Die beiden Deckschichten bilden eine Art Unter- und Oberzug, die durch die Kernschicht in einem konstanten Abstand gehalten werden.

Aus diesem Grund sollten die beiden Deckschichten aus einem Material bestehen, das eine hohe Zugfestigkeit aufweist. Bewährt hat sich beispielsweise eine Armierung mit Fasern, bspw. Kohlefasern. Für die Deckschichten eignet sich besonders ein mit Glasfasern verstärkter Kunststoff (GFK). Die Stärke dieser Schichten kann zwischen 1 mm und 5 mm liegen, vorzugsweise zwischen 1,5 mm und 4 mm.

Das Kernmaterial braucht dagegen nur eine gewisse Druckbeständigkeit in Richtung der Plattendicke aufzuweisen, um einen konstanten Abstand der Deckplatten zu gewährleisten. Da die Stärke dieser Schicht dem aus Stabilitätsgründen möglichst groß zu wählenden Abstand der Deckschichten entsprechen muß, bestimmt das spezifische Gewicht dieser Schicht maßgeblich das Gewicht der Karosserie. Das Gewicht dieser Schicht sollte deshalb so gering als möglich sein. Den obigen Anforderungen an ein Kernmaterial entspricht in besonderem Umfang ein Polyurethanschaum, vorzugsweise ein Hartschaum. Die Schichtdicke kann zwischen 20 mm und 60 mm liegen, vorzugsweise zwischen 25 mm und 55 mm, insbesondere zwischen 30 mm und 50 mm.

Wichtig ist, dass die Deckschichten möglichst fest und unlösbar auf die Kernschicht auflaminiert sind. Dies wird einerseits durch einen hochwertigen Klebstoff zwischen diesen Schichten erreicht. Ein hoher Anpreßdruck während des Aushärtens führt dazu, dass der Klebstoff in Poren und sonstige Vertiefungen der Kernschicht eindringen und sich dadurch innig mit dieser verbinden kann. Dieser Effekt wird noch dadurch unterstützt, dass in der Kernschichtoberfläche bspw. nutförmige Vertiefungen eingearbeitet sind, welche dem Klebstoff einen Zugang in die Tiefe der Kernschicht verschaffen.

Weitere Vorzüge ergeben sich dadurch, dass die Deckschichten des plattenförmigen Verbundwerkstoffs für jede Stirn- oder Seitenwand aus einem einzigen Stück bestehen. Dies steigert nicht nur das optisch-ästhetische Erscheinungsbild, sondern vermeidet auch mechanische Instabilitäten, wie sie an einer Stoßstelle ansonsten unvermeidlich wären.

Die Verarbeitung dieser Platten kann dadurch erfolgen, dass je eine Stirnwandplatte mit je einer Seitenwandplatte stumpf aneinander gesetzt und fixiert ist, vorzugsweise mit Klebstoff, Schrauben und/oder dgl. Diese Verbindungstechnik ist leichter zu beherrschen als ein Stoß auf Gehrung. Dabei bevorzugt die Erfindung eine Kombination aus Klebstoff und Schraubtechnik, wobei die Schrauben eigentlich nur für einen hinreichenden Anpreßdruck der aneinanderzufügenden Platten während der Aushärtephase des Klebstoffs zu sorgen haben; anschließend übernimmt der flächig aufgetragene Klebstoff die Stabilisierung der Verbindung, und er vermeidet außerdem das Eindringen von Feuchtigkeit.

Dabei hat das stumpfe Aneinandersetzen der zu verbindenden Platten verschiedene Vorteile: Einerseits stößt hier die vorzugsweise geschäumte Innenlage großflächig an die Außenseite der anderen Platte, so dass als Klebstoff bspw. der selbe verwendet werden kann wie für das Auflaminieren der Außenschichten auf das Kernmaterial einer Platte. Wenn ein Klebstoff verwendet wird, der ein oder beide Materialien anzulösen vermag, so findet sogar eine lokale Verschmelzung zwischen Klebstoff und Platte statt. Andererseits können die Verbindungsschrauben lotrecht zu der Stoßfläche verlaufen und dennoch eine hohe Länge haben, da sie sich innerhalb der Ebene derjenigen Wand erstrecken, die stumpf an die Grundseite der anderen Platte angesetzt ist. Deshalb ist eine hohe Preßkraft erzielbar, die frei von Scherkräften ist.

Die Haftkraft der Schrauben und daraus folgend die Festigkeit einer damit hergestellten Klebeverbindung kann dadurch gesteigert werden, dass diese Schrauben eine Platte - vorzugsweise mit darin versenktem Kopf - schaftseitig durchdringen und mit ihrem Gewinde in einen in die andere Platte eingesetzten, insbesondere leistenförmigen, Verankerungskörper eingreifen. Diese Maßnahme bietet den Schrauben einen ausreichenden Halt, so dass die erforderliche Festigkeit der Kernschicht auch aus diesem Grund nicht stärker sein muß als bspw. die von Poyurethanschaum. Als Verankerungskörper eignen sich bspw. in eine zu der betreffenden Kante parallele, von dieser beabstandet Nut eingeklebte Holzleisten. Andererseits könnte auch die Kernschicht von der betreffenden Stirnseite her ganz oder teilweise ausgefräst und dort durch eine eingeklebte Holzleiste ersetzt sein.

Indem an den Außenkanten die Stoßstellen und/oder die dortigen Schraub- und/oder Klebeverbindungen sowie ggf. an der Außenseite eingesetzte Verankerungsleisten durch eine Kantenschutzleiste abgedeckt sind, kann einerseits ein ausreichender Dichtungseffekt gegenüber Feuchtigkeit auch ohne Klebstoff oder Dichtungsmittel erzielt werden; andererseits kann die Festigkeit der Kanten erhöht werden und der optisch-ästhetische Gesamteindruck wird verbessert.

Bindeglied zwischen dem Aufbau und dem Fahrgestell bildet eine Bodenplatte, vorzugsweise mit dem selben Aufbau und/oder aus dem selben Material wie die Stirn- und/oder Seitenwände. Letztere lassen sich stumpf auf die Bodenplatte aufsetzen; die Fixierung kann bevorzugt ebenfalls mit Klebstoff und/oder mit (vertikalen) Schrauben erfolgen.

Nach dem selben Prinzip kann die Decke des Toilettenwagens hergestellt werden: Eine Deckenplatte, vorzugsweise von gleichem Aufbau und/oder aus dem selben Material wie die Stirn- und Seitenwandplatten, wird auf letztere stumpf aufgesetzt und mit Klebstoff und ggf. (vertikalen) Schrauben fixiert.

Für die Fenster und Türen werden Aussparungen in die jeweils einstückigen Stirn-, Seitenwand- und/oder Deckenplatten eingeschnitten. Um damit die Stabilität der selbsttragenden Karosserie so wenig als möglich zu beeinträchtigen, sollten allerdings so wenige Aussparungen als möglich, d.h., nur die absolut notwendigen, vorgesehen sein. Auf Fenster kann dabei weitgehend verzichtet werden; viel wichtiger sind Licht spendende Oberlichte, die außerdem zu öffnen sein sollten, um an heißen Tagen einen Wärmestau zu vermeiden und in Zusammenwirken mit geöffneten Türen für einen die Luftqualität verbessernden Durchzug zu sorgen.

Vorzugsweise sind 2 Türöffnungen vorgesehen - eine für das Damenabteil und eine für das Herrenabteil. Mehr Türen würden die Stabilität des Wagens unnötig beeinträchtigen. Die Türen können sich in der selben Seitenwand befinden, da die kastenförmige und nahezu fensterlose Konstruktion durch die übrigen Wände ein ausreichendes Maß an Stabilität erfährt.

Zwecks Befestigung der Türzarge kann der Plattenkern im Bereich der Türöffnungen randseitig ausgefräst und durch eingesetzte, insbesondere eingeklebte Holzleisten verstärkt sein. Diese Leisten erleichtern einerseits die Verankerung der das Türblatt tragenden Zarge; andererseits können sie auch die durch die Ausschnitte geschaffene Stabilitätsminderung der betreffenden Wand teilweise kompensieren.

Die Erfindung empfiehlt, zwischen den beiden Türen eine quer zur Fahrtrichtung verlaufende Innenwand anzuordnen. Auch diese Innenwand erfüllt mehrere Aufgaben: Einerseits wird dadurch das Damenabteil von dem Herrenabteil getrennt; andererseits erfahren die beiden Seitenwände eine zusätzliche Versteifung, so dass - unter welchen Einwirkungen auch immer - eine merkliche Durchwölbung derselben ausgeschlossen ist.

Die Innenwand läßt sich durch zwei auf ein Lattengerüst montierte Deckplatten bilden. Diese Konstruktion bildet ein Pendant zu dem Schichtaufbau der Karosserie: Zwei Deckschichten werden nach Art von Ober- und Unterzügen auf Abstand gehalten und dadurch versteift.

Die auf diesem Wege versteifte Innenwand erhält eine derart hohe Festigkeit, dass sie in der Lage ist, sanitäre Einrichtungen zu tragen. Daher kann an jeder Seite der Innenwand bspw. je ein Waschbecken aufgehängt werden. Zwei solche Waschbecken können gemeinsam mit den selben, die Innenwand durchgreifenden Schrauben befestigt werden, so dass sie sich gegenseitig die Waage halten.

Dabei kann der Hohlraum zwischen den beiden Deckplatten die Wasserzu- und - ablaufleitungen zu/von diesen Waschbecken und/oder anderen Sanitärinstallationen an der Innenwand aufnehmen.

Erfindungsgemäß befinden sich die Toilettenräume an der den Türöffnungen gegenüberliegenden Seitenwand, vorzugsweise nebeneinander aufgereiht. Damit läßt sich die Sanitärinstallation hinsichtlich Zu- und Ablaufleitungen vereinfachen.

Denn Zu- und Abwasserrohre sowie sonstige Installationseinrichtungen, bspw. Stromkabel, können hinter einer an der Innenseite der den Türen gegenüberliegenden Seitenwand mit Abstand vorgeblendeten Innenwand - von innen und außen unsichtbar - verlegt sein.

Eine vorgeblendete Innenwand bietet ferner die Möglichkeit, dahinter ein Gerüst zu installieren, an welchem sich Wasserkästen, Toilettensitze und/oder Urinale od. dgl. befestigen lassen. Auch in diesem Fall kann das Gerüst die weitere Aufgabe übernehmen, die vorgeblendete Innenwand in einem konstanten Abstand zu der Außenwand zu halten und dadurch die Tragkraft dieser Konstruktion auf das erforderliche Maß zu erhöhen, um auch schwere Toilettensitze sicher abstützen zu können.

Natürlich sind bei dem erfindungsgemäßen Toilettenwagen die einzelnen Toilettenräume durch Trennwände voneinander abgeteilt und mittels Türen verschließbar. Diese Innenwände haben jedoch keine versteifende Funktion und brauchen daher nur aus einer einschichtigen Platte hergestellt zu werden.

Um die Reinigung des erfindungsgemäßen Toilettenwagens, insbesondere durch Wischen des Bodens, zu erleichtern, kann auf der Oberseite der Bodenplatte ein Belag aus Kunststoff, bspw. Linoleum od. dgl., verlegt sein, der ohne Knick an den Raumwänden nach oben umgebogen ist und dort in eine Fußbodenleiste übergeht, so dass Schmutz od. dgl. keine Gelegenheit findet, sich festzusetzen.

Die Erfindung sieht vor, den erfindungsgemäßen Toilettenwagen mit wenigstens einem vorzugsweise elektrischen Heizkörper auszustatten. Aufgrund des Transportes muß dieser befestigt sein. Damit er andererseits in der warmen Jahreszeit nicht dem Angriff durch Vandalismus ausgesetzt ist, sollte er abnehmbar befestigt sein. Deshalb haben sich Einrichtungen zum lösbaren Einhängen eines Heizkörpers bewährt - vorzugsweise in dem Gang vor den Toilettenräumen jeder Abteilung.

Um der Bodenplatte die notwendige Tragkraft zu verleihen, ist sie auf vorzugsweise quer verlaufenden Rippen des Fahrgestells aufgesetzt. Eine ausreichende Fixierung erlaubt auch starke Bremsungen, ohne dass ein Verrutschen des Aufbaus gegenüber dem Fahrgestell zu befürchten ist.

Die Erfindung läßt sich dahingehend weiterbilden, dass die tragenden Rippen des Fahrgestells Bestandteil eines Rahmens sind, dessen Längsschienen durch je einen Unterzug versteift sind. Dadurch kann das hohe Gewicht eines erfindungsgemäßen Toilettenwagens von bis zu 3,5 t von nur zwei Schienen getragen werden.

Bevorzugt ist (sind) die Radachse(n) etwa in dem mittleren Bereich des Wagens an dem Fahrgestell-Rahmen fixiert. Diese Fahrgestell-Konstruktion ergänzt sich einerseits mit der vorteilhaften Anordnung einer starren Deichsel, wodurch die Lenk- und Rangiereigenschaften verbessert werden. Andererseits wird dadurch die Vertikalausrichtung des Toilettenwagens mittels abspindelbarer Standfüße begünstigt.

Die Räder sollten gefedert sein, damit bei höheren Fahrgeschwindigkeiten von bis zu 80 km/h durch Fahrbahnunebenheiten verursachte Stöße von den empfindlichen Sanitäreinrichtungen ferngehalten werden.

Schließlich entspricht es der Lehre der Erfindung, dass die Federung der Räder an der Türseite weicher ist als die Federung der Räder an der gegenüber liegenden Seite. Damit muß der Tatsache Rechnung getragen werden, dass die einseitig installierten Sanitäreinrichtungen den erfindungsgemäßen Toilettenwagen stark seitenlastig machen. Ohne eine asymmetrische Federung könnte eine Horizontalausrichtung des Toilettenwagens größere Schwierigkeiten bereiten.

Vervollkommnet wird die Erfindung durch eine als Auflaufbremse ausgelegte Bremseinrichtung, die mit einer Feststelleinrichtung integriert sein kann. Im festgebremsten Zustand kann der Toilettenwagen sodann durch die Abspindelung der Standfüße stabilisiert werden.

Weitere Merkmale, Eigenschaften, Vorteile und Wirkungen auf der Basis der Erfindung ergeben sich aus der folgenden Beschreibung einer bevorzugten Ausführungsform der Erfindung sowie anhand der Zeichnung. Hierbei zeigt:
- Fig. 1: einen erfindungsgemäßen Toilettenwagen in einer perspektivischen Darstellung;

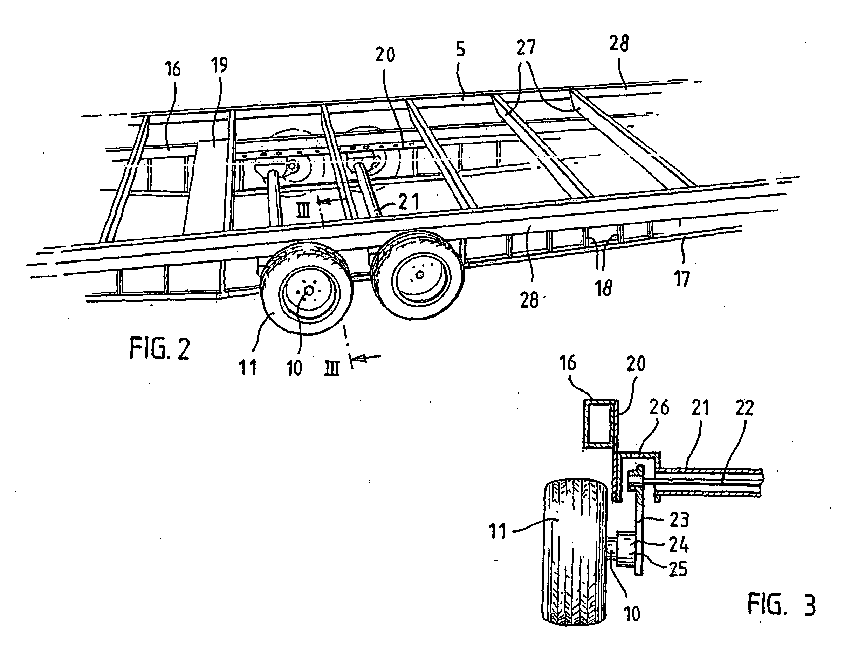

- Fig. 2: das Fahrgestell des Toilettenwagens aus Fig. 1 in einer perspektivischen Darstellung sowie teilweise abgebrochen;
- Fig. 3: einen Schnitt durch die Fig. 2 entlang der Linie III - III;

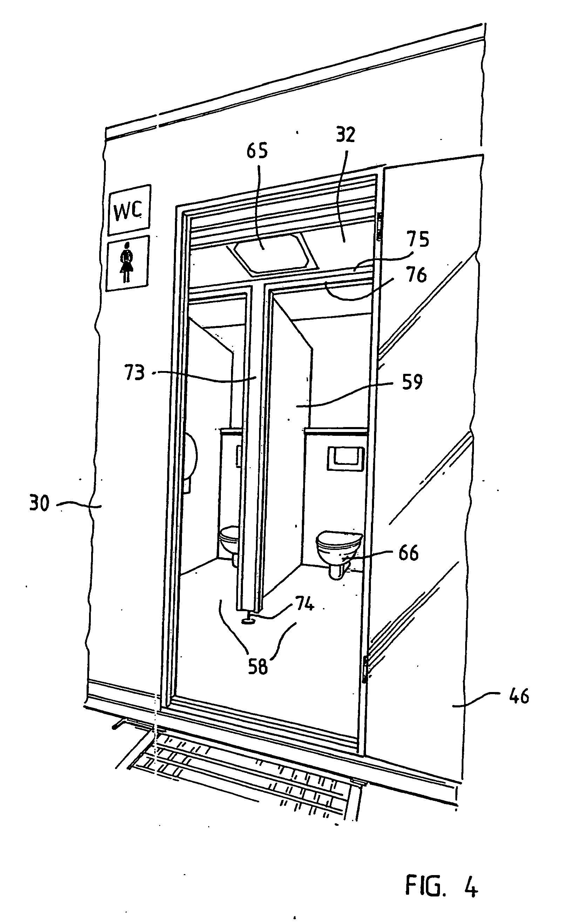

- Fig. 4: einen Blick in das Damenabteil des Toilettenwagens aus Fig. 1;
- Fig. 5: den Gang vor den Toilettenräumen;
- Fig. 6: einen Blick in das Herrenabteil des Toilettenwagens aus Fig. 1;

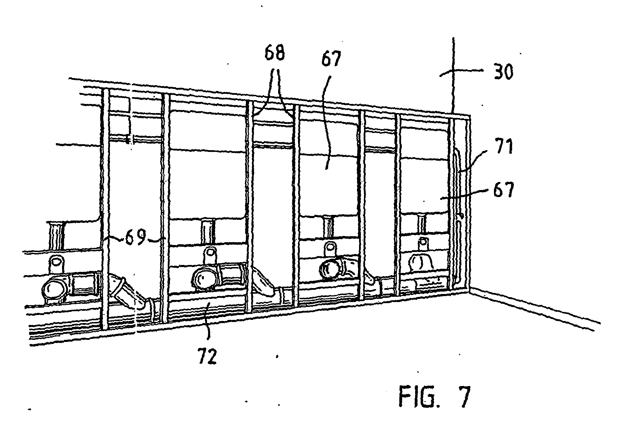

- Fig. 7: die durch eine vorgeblendete Innenwand normalerweise verdeckte Gerüstkonstruktion zum Tragen der Toilettensitze;
- Fig. 8: einen Querschnitt durch die Unterkante des Aufbaus;
- Fig. 9: einen Querschnitt durch eine vertikale Kante des Aufbaus;
- Fig. 10: einen Querschnitt durch eine Türzarge; sowie
- Fig. 11: einen Querschnitt durch eine Innenwand.

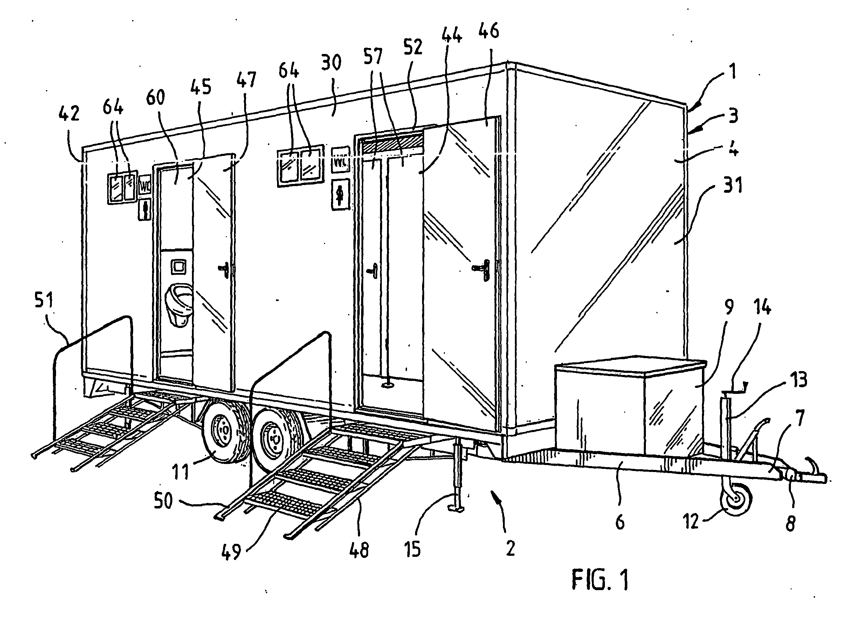

Der Toilettenwagen 1 aus Fig. 1 kann von einem Lieferwagen an den Einsatzort gezogen und dort mühelos von einer einzigen Person abgestellt, ausgerichtet und angeschlossen werden.

Hauptbestandteile des Toilettenwagens 1 sind das Fahrgestell 2 einerseits und ein quader- oder kastenförmiger Aufbau 3 mit einer selbsttragenden Karosserie 4 andererseits. Dieser Aufbau 3 hat eine Breite von bspw. etwa 2,5 m und bspw. eine etwa ebensolche Höhe; seine Länge in Fahrtrichtung beträgt vorzugsweise zwischen 6 und 12 m. Das Fahrgestell 2 umfaßt einen Rahmen 5, insbesondere einen Metallrahmen, von der Größe der Grundfläche des Aufbaus 3.

Der Rahmen 5 bzw. das Fahrgestell ist an seinem vorderen Ende mit einer starren Deichsel 6 versehen. Das freie Deichselende 7 trägt eine Kupplung 8 zur Ankopplung an einen Lieferwagen, mit dem Pendant zu einem Kugelkopf, wie er an den Anhängerkupplungen von Personenkraftwagen und Lieferwagen üblich ist und in Deutschland gemäß StZVO derzeit eine Anhängelast von bis zu 3,5 t erlaubt. Auf der Deichsel 6 kann außerdem ein Kasten 9 mit notwendigen Installationsgeräten (Pumpen, Sicherungen, etc.) od. dgl. angeordnet sein.

Zwecks Erleichterung der Rangierbarkeit und wegen der starren Deichsel 6 sind die Radachsen 10 etwa in der Mitte des Fahrgestells 2 angeordnet, gegenüber dem Schwerpunkt des Toilettenwagens 1 etwas nach hinten versetzt, so dass der Toilettenwagen 1 vorne etwas schwerer ist als hinten. Er ruht daher nach dem Abkuppeln stabil auf den Haupträdern 11 und einem unter der Deichsel 6 angeordneten Bugrad 12.

Das Bugrad 12 ist höhenverstellbar, insbesondere über eine Spindel 13, die mittels einer Kurbel 14 gegenüber einem Gewindeelement der Deichsel 6 verdrehbar ist, und es kann (passiv) lenkbar sein, um den Toilettenwagen 1 mittels der Räder 11, 12 von Hand bewegen zu können.

Im Bereich jeder der vier Ecken des Fahrgestellrahmens 5 ist je ein abspindelbarer Standfuß 15 vorgesehen, womit der Toilettenwagen 1 auf beliebigem, unebenem Gelände stabil aufgestellt werden kann.

Bereits der leere Toilettenwagen 1 kann je nach Ausführungsform mehrere Tonnen wiegen, bspw. 2 t oder mehr. Aufgrund der maximalen Länge von bis zu 12 m und der Anordnung der Haupträder 11 etwa unter der Mitte des Rahmens 5 lastet auf zwei vorzugsweise hohlprofilförmigen, insbesondere rechteckprofilförmigen Längsträgern 16 des Fahrgestells 2 ein sehr hohes Gewicht. Um dies abzufangen, ist an jedem Längsträger 16 ein von vorne bis hinten durchgehender Unterzug 17 vorgesehen, der über eine größere Anzahl von Stegen 18 mit dem betreffenden Längsträger 16 verbunden ist. Die Unterzüge 17 verlaufen im Bereich der Radachsen 9 und vorzugsweise unterhalb derselben parallel zu den Längsträgern 16 und steigen anschließend bis zu den Enden der Längsträger 16 an, mit denen sie verbunden sind. Durch die nach vorne und hinten ansteigenden Unterzüge 17 wird die Bodenfreiheit des Toilettenwagens 1 verbessert. Die Stege 18 verlaufen vertikal, könnten aber - zur weiteren Erhöhung der Stabilität auch schräg gegenüber den Längsträgern 16 geneigt sein.

Die beiden Längsträger 16 durch einige quer zur Fahrtrichtung verlaufende Querträger 19 verbunden, bspw. in Abständen von 3 m. Die Länge der Querträger 19 sowie der Abstand der damit verbundenen Längsträger 16 ist kleiner als die Spurweite eines Radsatzes 10, so dass sich die Längsträger 16 jeweils zwischen den Rädern 11 einer Radachse 10 erstrecken. Die Spurweite wiederum ist kleiner als die Breite des Aufbaus 3, so dass die Haupträder 11 unterhalb des Aufbaus 3 befinden.

Ferner sind in dem Bereich der Radachsen 10 Lochreihen vorgesehen, insbesondere in Form von Lochschienen 20. Diese sind mit der Lochreihe über die Unterseiten der Längsträger 16 nach unten überstehend an letzteren angeschweißt und dienen zum Festschrauben vorgefertigter Radachsen 10. Die Lochreihen sind erforderlich, damit die Radachsen 10 nach Fertigstellen des Toilettenwagens 1 versetzt werden können, falls sich dessen Gleichgewicht noch nicht als optimal erweisen sollte.

Jeder Rad-Achsen-Satz 10 umfaßt ein rohrförmiges Gehäuse 21, in welchem sich ein Torsionsstab 22 befindet, der mit seinem inneren Ende etwa in der Mitte des rohrförmigen Gehäuses 21 unverdrehbar fixiert ist. An dem aus dem Rohr 21 herausragenden Ende jedes Torsionsstabs 22 ist eine Schwinge 23 fixiert, welche das eigentliche Radlager 24 sowie eine Bremse 25 trägt für je ein luftbereiftes Hauptrad 11 (gefederte Einzelradaufhängung). Die Bremse 25 ist als Feststellbremse ausgebildet und kann mit einer Auflaufbremse kombiniert sein, welche bei einer Schubkraft im Bereich der Kupplung 8 eingreift, um den gezogenen Toilettenwagen 1 abzubremsen.

Die Schwingen 23 werden von oben abgedeckt und umgriffen von je einer nach unten offenen, kasten- oder U-förmigen Erweiterung 26 nach Art eines Profils mit in Fahrtrichtung verlaufender Längsachse. Diese Erweiterungen 26 sind an je einer Stirnseite des rohrförmigen Gehäuses 21 befestigt. In der Außenseite der Erweiterungen/Abdeckungen 26 befinden sich Befestigungsbohrungen zur Fixierung an den Lochschienen 20.

Auf den Oberseiten der Längsträger 16 sind Querstege 27 befestigt, insbesondere angeschweißt, deren Länge der Breite des Aufbaus 3 entspricht. Benachbarte Querstege 27 haben einen Abstand von 0,5 - 1 m. Diese Querstege 27 sind an ihren Enden durch in Fahrtrichtung verlaufende Längsholme 28 miteinander verbunden, insbesondere verschweißt. Die Länge der Längsholme 28 entspricht der des Aufbaus 3. Die Längsholme 28 und Querstege 27 bilden zusammen den Rahmen 5, der den Aufbau 3 trägt.

Der Aufbau 3 besteht aus der Bodenplatte 29, zwei Seitenwänden 30, zwei Stirnwänden 31 und einer Wagendecke 32. Die Bodenplatte 29 ist mehrmals mit den Längsholmen 28 und/oder Querstegen 27 verschraubt.

Alle Außenplatten - Boden 29, Seiten- und Stirnwände 30, 31, Decke 32 - bestehen aus dem selben Material, einer Verbundplatte mit einer Kernschicht 33 aus Polyurethanschaum mit einer Stärke von etwa 40 mm und aus zwei an diese Kernschicht 33 angeklebten Deckschichten 34 aus mit Glasfasern verstärktem Kunststoff und einer Dicke von jeweils etwa 2 mm. Aufgrund des konstanten Abstandes und der Undehnbarkeit der Deckschichten 34 hat dieses Verbundmaterial eine äußerst große Verwindungssteifheit. Damit sich die aneinandergeklebten Schichten 33, 34 nicht voneinander lösen können, sind sie unter Preßdruck verklebt, d.h., während der Aushärtephase des Klebstoffs wird permanent ein Preßdruck ausgeübt. Damit der Klebstoff dabei besonders tief in die Poren der Kernschicht eindringen kann, sind in die Flachseiten der Kernschicht 34 vor dem Verkleben Rillen eingefräst oder eingeschnitten, bspw. mit einem Querschnitt von 1 x 1 mm oder 2 x 2 mm.

Die Platten 29 - 32 sind an den Kanten stumpf aneinandergesetzt und miteinander verklebt. Den notwendigen Anpreßdruck während der Aushärtephase dieses Klebstoffs liefern Schrauben 35, welche die zu verklebenden Platten 29 - 32 miteinander verbinden. Diese Schrauben 35 durchgreifen die jeweils mit einer Flachseite 36 anstoßende Platte 29 - 32 und sind in die andere Platte 29 - 32 parallel zu deren Ebene eingeschraubt.

Damit eine solche Schraubverbindung besonders fest ist, ist in der zweiten, von der Schraube nicht vollständig durchdrungenen Platte 29 - 32 ein leistenförmiger Verankerungskörper 37 eingesetzt, insbesondere in eine rillenförmige, zu der betreffenden Stoßkante parallele Ausnehmung 38 eingeklebt. Die betreffende Ausnehmung 38 kann von einer Flachseite 39, aber auch von der Stirnseite 40 her in die Platte 29 - 32 eingearbeitet sein.

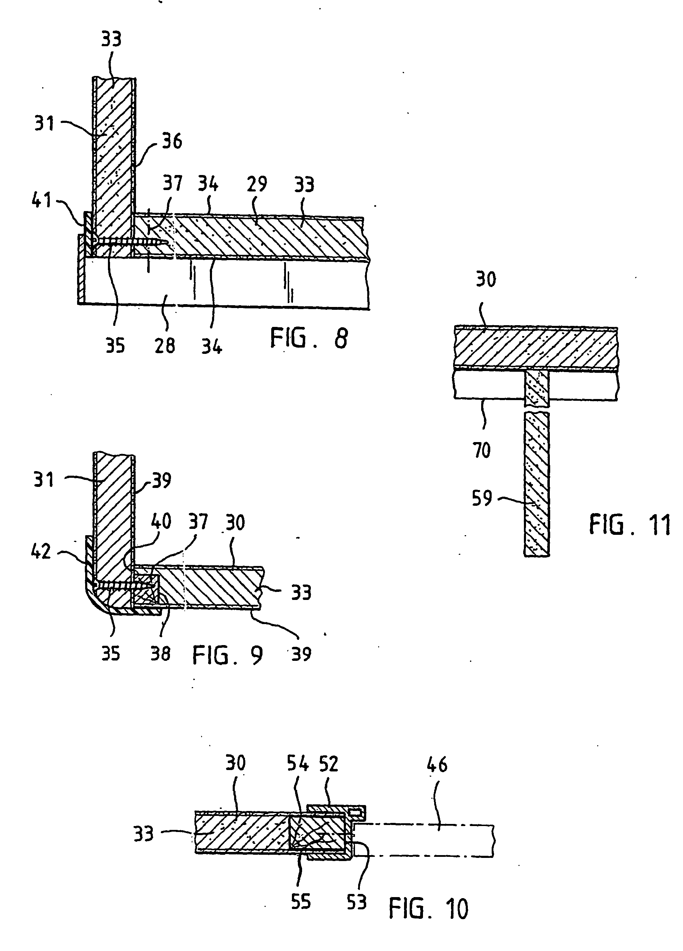

Fig. 8 zeigt die Kante zwischen der Bodenplatte 29 und einer Stirn- oder Seitenwand 30, 31; Fig. 9 die Verbindung einer Stirn- mit einer Seitenwand 30, 31. Man erkennt, daß die Schraube 35 und/oder die Verankerungsleiste 37 hinter einer Blende 41, 42 verschwinden. Diese kann im Fall einer Unterkante (Fig. 8) als Flachprofil 41 ausgebildet sein, das an der betreffenden Kante entlangläuft; an einer Seitenkante (Fig. 9) handelt es sich hierbei vorzugsweise um ein ggf. abgerundetes Eckprofil 42. Diese Profile 41, 42 sind vorzugsweise angeklebt, wodurch sich außerdem ein optimaler Dichtungseffekt ergibt.

Der Aufbau 3 ist durch eine quer zur Fahrtrichtung verlaufende, innere Trennwand 43 in eine Damenabteilung 44 und eine Herrenabteilung 45 unterteilt. Jede Abteilung 44, 45 verfügt über eine eigene Tür 46, 47. Zu jeder Tür 46, 47 führt eine treppenförmige, ausziehbare Leiter 48 empor, die zum Transport in dafür vorgesehene Kästen oder Halterungen des Fahrgestells 2 einschiebbar ist. Die Treppenstufen 49 sind nach Art von Parallellenkern durch die als je zwei zueinander parallele Holme 50 ausgebildeten Wangen gelenkig miteinander verbunden und behalten daher beim Herabschwenken der ausgezogenen Treppenholme 50 ihre horizontale Orientierung bei.

Je ein seitlich auf die ausgezogenen Leitern oder Treppen 48 aufsteckbares Geländer 51 sorgt für eine ausreichende Trittsicherheit der den Toilettenwagen 1 betretenden Personen.

Die Türen 46, 47 sind in üblicher Form über Angeln an der betreffenden Türzarge 52 eingehängt, die in eine zuvor in eine Seitenwand 30 eingeschnittene bzw. -gesägte Türausnehmungen 53 eingesetzt und dort verankert ist. Zu diesem Zweck wurde die Kernschicht 33 zunächst im Bereich des Randes einer Türausnehmung 53 rundum ausgefräst und dort durch eine eingeklebte Holzleiste 54 ersetzt. An dieser ist die Türzarge 52 sodann festgeschraubt 55.

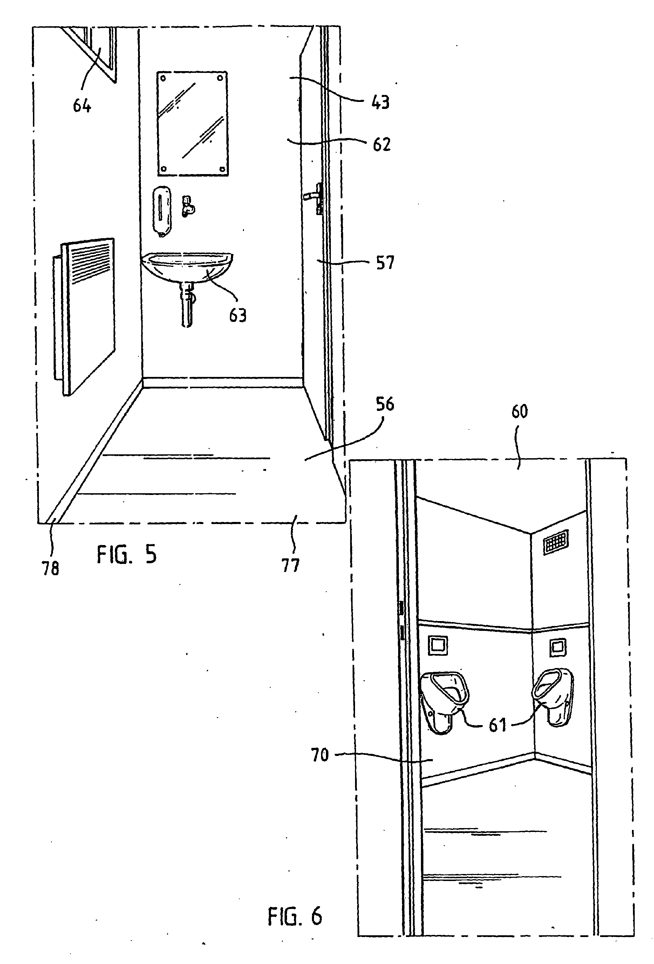

In jeder der beiden Abteilungen 44, 45 erstreckt sich hinter der jeweiligen Eingangstür 46, 47 ein zu der betreffenden Seitenwand 30 paralleler Gang 56 (Fig. 5). Von diesem zweigen dann Innentüren 57 zu den einzelnen Toilettenräumen 58 ab, welche sich an der den Türen 46, 47 gegenüber liegenden Seitenwand 30 befinden und durch je eine Innenwand 59 voneinander getrennt sind. In der Herrenabteilung 45 befindet sich außerdem ein nicht abgeschlossener Raum 60 mit mehreren Urinalen 61.

Die Abteilungstrennwand 43 besteht aus einem zwischen Boden 29, Seitenwänden 30 und Decke 32 verankerten Lattengerüst festgeschraubten Kunststoffplatten 62. An dieser Abteilungstrennwand 43 ist in jeder Abteilung 44, 45 wenigstens ein Waschbecken 63 festgeschraubt. Dabei sind (je) zwei Waschbecken 63 mit denselben, die Abteilungstrennwand 43 vollständig durchdringenden Schrauben fixiert und halten sich dadurch das statische Gleichgewicht. Da die Abteilungstrennwand 43 außerdem nach dem selben Grundprinzip (zwei Deckschichten 62 in konstantem Abstand voneinander) aufgebaut ist wie die Außenwände 29 - 32, ist diese Konstruktion ebenfalls sehr verwindungssteif und kann daher auch schwere Waschbecken 63 aus Sanitärkeramik während der Fahrt sicher tragen. Die Wasserzu- und -ablaufrohre zu den Waschbecken 63 sind unsichtbar in dem Hohlraum zwischen den beiden Deckplatten 62 der Abteilungstrennwand 43 verlegt.

In den Gängen 56 befindet sich außerdem je eine Halterung zur abnehmbaren Fixierung eines elektrischen Heizkörpers, der seinen Strom über eine Steckdose an der Abteilungstrennwand 43 bezieht und daher im Sommer leicht entfernt werden kann.

Kleine Fenster 64 in einer Seitenwand 30 und/oder Oberlichte 65 im Dach 32 sorgen für eine Beleuchtung des Toilettenwagens 1. Oberlichte 65 sind vorzugsweise aufstell- oder aufklappbar, um eine Durchlüftung des Toilettenwagens 1 zu ermöglichen.

Toilettensitze 66, Wasser- oder Spülkästen 67 und Urinale 61 sind an einem Gerüst 68 aus vertikal und horizontal verlaufenden Profilen 69, vorzugsweise metallischen Preßprofilen, befestigt, das an der Innenseite der den Türen 46, 47 gegenüber liegenden Seitenwand 30 des Toilettenwagens 1 fixiert, insbesondere festgeschaubt, ist. Dieses Profilgerüst 68 hat etwa eine Höhe von 1,20 m, erstreckt sich über die ganze Länge des Toilettenwagens 1 und hat eine Stärke, die etwa der Tiefe der Wasserkästen 67 entspricht, so daß diese hinter einer vorgeblendeten Abdeckwand aus einer Kunststoffplatte 70 genauso verborgen werden können wie Wasserzulaufleitungen 71 und -ablaufleitungen 72.

Die Trennwände 59 zwischen je zwei benachbarten Toilettenräumen 58 erstrecken sich zwischen der Seitenwand 30 bzw. der Innenverkleidung 70 des Gerüsts 68 einerseits und vertikalen Pfosten 73 auf der Gangseite andererseits. Diese Pfosten 73 sind - ggf. über Abstandhalter 74 - zwischen dem Boden 29 einerseits und der Wagendecke 32 oder einem im Bereich der Wagendecke in horizontaler Richtung verlaufenden Balken 75 andererseits eingespannt und fixiert. Da die Trennwände 59 keine tragende Funktion erfüllen müssen, bestehen sie jeweils nur aus einer einzigen Kunststoffplatte, bspw. mit einer Stärke von 10 - 25 mm, vorzugsweise von 15 - 20 mm. Um die Reinigung des Toilettenwagens 1 zu erleichtern, reichen die Trennwände 59 nicht bis zum Boden 29.

Die Innentüren 57 sind über Angeln entweder direkt an den Pfosten 73 angelenkt oder an dort fixierten Zargen 76.

Der Boden 29 des Toilettenwagens 1 ist mit einem Kunststoffbelag 77 versehen, der im Bereich der Außenkanten des Toilettenwagens 1 ohne Knick, d.h., in Form einer sanften Rundung, in eine an den Außenwänden 30, 31 entlang laufende Bodenleiste 78 übergeht, so daß sich dort kein Schmutz festsetzen kann.

## Patentansprüche

1. Toilettenwagen (1) mit einem Fahrgestell (2), einer Kupplung - (8) zum Anhängen an ein Zugfahrzeug, die das Pendant zu einem Kugelkopf aufweist, wie er an der Anhängerkupplung an einem Personenkraftwagen oder Lieferwagen üblich ist, und mit einem geschlossenen Aufbau (3), der mit mehreren Toilettenräumen (58) eingerichtet ist, wobei die Karosserie (4) des Aufbaus (3) aus einem leichten, aber verwindungssteifen, plattenförmigen Verbundwerkstoff mit einem Schichtaufbau selbsttragend ausgeführt ist, der eine Kernschicht (33) aufweist und zwei äußere Deckschichten (34), **dadurch gekennzeichnet, dass** die Karosserie (4) des Aufbaus (3) aus zwei ebenen Seitenwänden (30), zwei ebenen Stirnwänden (31) und einer Wagendecke (32) besteht, wobei die Stimwandplatten (31) mit den angrenzenden Seitenwandplatten (30) derart stumpf aneinander gesetzt und fixiert sind, dass die Kernschicht (33) einer Platte (30,31) großflächig an eine Deckschicht (34) der anderen Platte (31,30) stößt.

2. Toilettenwagen nach Anspruch 1, **dadurch gekennzeichnet, daß** die Kernschicht (33) des plattenförmigen Verbundwerkstoffs aus einem Schaum, insbesondere aus Polyurethanschaum besteht.

3. Toilettenwagen nach Anspruch 1 oder 2, **dadurch gekennzeichnet, daß** die Deckschichten (34) des plattenförmigen Verbundwerkstoffs aus einem mit Fasern, insbesondere Glasfasern verstärkten Kunststoff (GFK) bestehen.

4. Toilettenwagen nach einem der Ansprüche 1 bis 3, **dadurch gekennzeichnet, daß** die Deckschichten (34) des plattenförmigen Verbundwerkstoffs für jede Stirn- oder Seitenwand (30, 31) aus einem einzigen Stück bestehen.

5. Toilettenwagen nach einem der vorhergehenden Ansprüche, **dadurch gekennzeichnet, dass** je eine Stirnwandplatte (31) mit je einer Seitenwandplatte (30) mit Klebstoff und/oder Schrauben verbunden ist.

6. Toilettenwagen nach Anspruch 5, **dadurch gekennzeichnet, daß** die Schrauben (35) eine Platte (29-32) mit versenktem Kopf durchdringen und mit ihrem Gewinde in einen in die andere Platte (29-32) eingesetzten, insbesondere leistenförmigen, Verankerungskörper (37) eingreifen.

7. Toilettenwagen nach einem der vorhergehenden Ansprüche, **dadurch gekennzeichnet, daß** an den Außenkanten die Stoßstellen und auch die dortigen Schraubverbindungen durch eine Kantenschutzleiste (41, 42) abgedeckt sind.

8. Toilettenwagen nach einem der vorhergehenden Ansprüche, **dadurch gekennzeichnet, daß** die Stirn- und Seitenwandplatten (30, 31) stumpf an eine Bodenplatte (29) und/oder an eine Deckenplatte (32), jeweils vorzugsweise von gleichem Aufbau, auf- oder angesetzt und mit Klebstoff und ggf. Schrauben (35) fixiert sind.

9. Toilettenwagen nach einem der vorhergehenden Ansprüche, **dadurch gekennzeichnet, daß** für Fenster (64) und Türen (46, 47) Aussparungen (53) in die jeweils einstückigen Stim-, Seitenwand- und/oder Deckenplatten (29-32) eingeschnitten sind.

10. Toilettenwagen nach Anspruch 12, **dadurch gekennzeichnet, dass** im Bereich der Aussparungen (53) für Fenster (64), Türen (46, 47) der Plattenkem (33) randseitig ausgefräst und durch eingesetzte Holzleisten (37) ersetzt ist, woran die Türzarge (52) und/oder der Fensterrahmen befestigt ist.

## Claims

1. A toilet trailer (1) with a chassis (2), a coupling (8) for attaching to a towing vehicle and which has the counterpart to a ball head, as is conventional in the trailer coupling on an automobile or van, and with a closed structure (3) which is equipped with a plurality of toilet compartments (58), wherein the body (4) of the structure (3) is of monocoque construction made of a light but torsionally stiff, lamellar composite material with laminated structure, which has a core layer (33) and two outer top layers (34), **characterised in that** the body (4) of the structure (3) comprises two flat side walls (30), two flat side walls (31) and a trailer ceiling (32), wherein the end wall panels (31) are so butted against the adjoining end wall panels (30) and fixed thereto that the core layer (33) of one panel (30,31) abuts over a large area against a top layer (34) of the other panel (31,30).

2. A toilet trailer according to Claim 1, **characterised in that** the core layer (33) of the lamellar composite material comprises a foam, in particular polyurethane foam.

3. A toilet trailer according to Claim 1 or 2, **characterised in that** the top layers (34) of the lamellar composite material comprise a plastics material (GRP) reinforced with fibres, in particular glass fibres.

4. A toilet trailer according to any one of Claims 1 to 3, **characterised in that** the top layers (34) of the lamellar composite material comprise a single piece for each end wall or side wall (30,31).

5. A toilet trailer according to any one of the preceding Claims, **characterised in that** each side wall panel (31) is connected to each side wall panel (30) by adhesive and/or screws.

6. A toilet trailer according to Claim 5, **characterised in that** the screws (35) pass through one panel (29-32) with a countersunk head and engage with their thread in an anchoring member (37) which is inserted into the other panel (29-32) and which, in particular, is fillet shaped.

7. A toilet trailer according to any one of the preceding Claims, **characterised in that** on the outer edges the butt joints and also the screw connections at these locations are covered by an edge protection strip (41,42).

8. A toilet trailer according to any one of the preceding Claims, **characterised in that** the end wall and side wall panels (30,31) are butted on or against a base panel (29) and/or on or against a top panel (32), in each case preferably of like construction, and are fastened by adhesive and, optionally, screws (35).

9. A toilet trailer according to any one of the preceding Claims, **characterised in that** recesses (53) for windows (64) and doors (46,47) are cut into the respective one-piece end wall, side wall and/or top panels (29-32).

10. A toilet trailer according to Claim 12, **characterised in that** in the vicinity of the recesses (53) for windows (64) and doors (46,47) the panel core (33) is milled out at the edges and replaced with inserted wooden fillets (37), on which the door frame (52) and/or window frame is mounted.

## Revendications

1. Toilettes mobiles (1) comportant un châssis (2), un attelage (8) pour l'accrochage à un véhicule tracteur présentant le pendant pour une boule telle qu'on en trouve habituellement sur l'attelage de remorque d'un véhicule de tourisme ou d'un véhicule de livraison, et une structure (3) fermée, équipée de plusieurs cabinets (58), la carrosserie (4) de la structure (3) étant réalisée comme carrosserie autoporteuse dans un matériau composite léger mais résistant à la torsion, sous forme de panneau offrant une structure en couches qui présente une couche centrale (33) et deux couches de recouvrement (34) extérieures, **caractérisées en ce que** la carrosserie (4) de la structure (3) comprend deux parois latérales (30) planes, deux parois frontales (31) planes et un plafond (32), les panneaux des parois frontales (31) étant assemblés bord à bord avec les panneaux des parois latérales (30) et fixés de telle sorte que la couche centrale (33) d'un panneau (30, 31) est aboutée, sur une grande surface, contre une couche de recouvrement (34) de l'autre panneau (31, 30).

2. Toilettes mobiles selon la revendication 1, **caractérisées en ce que** la couche centrale (33) du matériau composite sous forme de panneau se compose d'une mousse, en particulier d'une mousse polyuréthanne.

3. Toilettes mobiles selon la revendication 1 ou la revendication 2, **caractérisées en ce que** les couches de recouvrement (34) du matériau composite sous forme de panneau sont composées d'une matière plastique (GFK) renforcée avec des fibres, en particulier avec des fibres de verre.

4. Toilettes mobiles selon l'une des revendications 1 à 3, **caractérisées en ce que** les couches de recouvrement (34) du matériau composite sous forme de panneau sont réalisées d'une seule pièce pour chaque paroi frontale ou latérale (30, 31).

5. Toilettes mobiles selon l'une des revendications précédentes, **caractérisées en ce qu'**un panneau de paroi frontale (31) est respectivement assemblé avec un panneau de paroi latérale (30) à l'aide de colle et/ou de vis.

6. Toilettes mobiles selon la revendication 5, **caractérisées en ce que** les vis (35) traversent un panneau (29-32) par leur tête conique et s'engagent par leur filet dans un corps d'ancrage (37), en particulier en forme de baguette, inséré dans l'autre panneau (29-32).

7. Toilettes mobiles selon l'une des revendications précédentes, **caractérisées en ce que**, sur les arêtes extérieures, les points d'aboutage et également, les assemblages à vis qui s'y trouvent, sont recouverts par une baguette de protection d'arête (41, 42).

8. Toilettes mobiles selon l'une des revendications précédentes, **caractérisées en ce que** les panneaux des murs frontal et latéral (30, 31) sont aboutés sur ou contre un panneau de plancher (29) et/ou un panneau de plafond (32), chacun de préférence de même structure, et sont fixés à l'aide de colle et, le cas échéant, de vis (35).

9. Toilettes mobiles selon l'une des revendications précédentes, **caractérisées en ce que**, pour les fenêtres (64) et les portes (46, 47), des évidements (53) sont découpés dans les panneaux, respectivement d'une seule pièce, des murs frontal, latéral et/ou de plafond (29-32).

10. Toilettes mobiles selon la revendication 9, **caractérisées en ce que**, dans la zone des évidements (53) prévus pour les fenêtres (64) et les portes (46, 47), la couche centrale (33) des panneaux est fraisée sur les bords et remplacée par des baguettes en bois (37) insérées contre lesquelles le chambranle de porte (52) et/ou le châssis des fenêtres est fixé.
